# EUROPEAN PATENT APPLICATION

(11) **EP 3 106 810 A1**
(43) Date of publication of application: **21.12.2016**
(21) Application number: 15172309.5
(22) Date of filing: 16.06.2015
(51) Int. Cl.: F26B 3/20, C02F 11/12

(54) **APPARATUS AND METHOD FOR PROCESSING SLUDGE**

(71) Applicant: Savaterra Oy, 96300 Rovaniemi (FI)
(72) Inventor: Aho, Olli, 96300 Rovaniemi (FI)
(74) Representative: Kolster Oy Ab

(57) **Abstract**

The invention relates to an apparatus and method for processing sludge. The apparatus comprises a processing drum (DR) provided with an inlet (IN) and an outlet (OUT) for sludge to be processed and for heat-accumulating material (HCM) in the form of particles that maintain a heat storing capacity of the sludge (SL). According to the invention, a return line (RL) for recirculating heat-accumulating material (HCM) to be removed from a sludge handling space (SHS) inside the processing drum (DR) back into the sludge handling space inside the processing drum (DR) for reuse is a return channel (RL) provided in connection with said processing drum (DR).

## Description

### Background of the invention

The invention relates to processing of sludge or other organic matter. There are various alternatives for processing waste sludge. Prior art knows digestion, for example, which is an anaerobic process, and composting, which is an aerobic process, i.e. it uses oxygen. Thermal treatment, or treatment by heating, is also known.

A prior art example of heat treatments is drying of waste sludge by direct hot air. Another prior art method using heating is sludge treatment with hot water. In addition, prior art heat treatments include methods using ordinary water vapour, and use of superheated steam is also known.

In methods and devices employing heating it is known to use heat-accumulating material, such as ceramic balls or other particles, in the material to be treated to provide improved thermal economy and functionality. An example of this kind method and apparatus is disclosed in publication JPS58224217. In a prior solution, recirculation of the heat-accumulating material is carried out by external equipment, which requires special constructions and space for accommodating them. Moreover, external constructions may be liable to damage, and heat stored in the heat-accumulating material may be lost.

### Brief description of the invention

An object of the invention is thus to provide a method and an apparatus implementing the method so as to enable the aforementioned problems to be solved. The object of the invention is achieved by a method and a system which are characterised by what is disclosed in the independent claims. Preferred embodiments of the invention are disclosed in the dependent claims.

The idea of the invention is to implement recirculation of heat-accumulating material by structures in connection with the processing drum of system.

Advantages of the method and the system of the invention include a compact and reliable structure, and energy efficiency.

### Brief description of the figures

The invention is now described in closer detail in connection with preferred embodiments and with reference to the accompanying drawings, in which
Figure 1 is a side view of the apparatus, without a screen;
Figure 2 shows an axial view of the apparatus from an end of a drum;
Figure 3 is a cross-section along line A-A of Figure 2, with a screen;
Figure 4 shows a cross-section along line B-B of Figure 1;
Figure 5 shows the apparatus of Figure 1 as viewed from an oblique direction.

### Detailed description of the invention

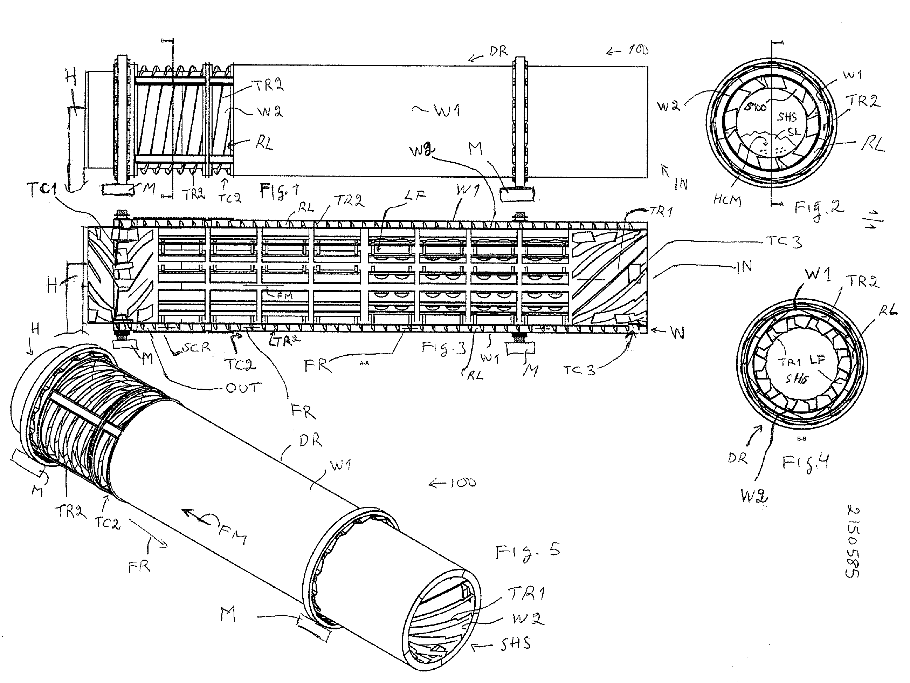

With reference to Figures 1 to 5, the following is disclosed.

The material to be processed by an apparatus 100 is organic sludge SL, particularly one or more of the following: municipal sewage sludge, agricultural sludge, purification plant sludge. The sludge may originate e.g. from a municipal or other regional sewage plant.

The processing may aim at drying, i.e. reducing the moisture percentage, of the material, or sludge SL, at destroying pathogenic material and/or treating the material so that it is suitable as fertilizer or as soil amendment. In addition to or instead of the above, the applicant's apparatus is also designed for sludge incineration.

The apparatus comprises a heater H, which may be a direct heater running on light fuel oil, for example, or the heater H may be a device generating superheated steam, for example, by forming a gas mixture of water vapour and a fuel combustion gas. The fuel the combustion of which produces the necessary combustion gas may be light fuel oil, for example. However, the invention disclosed here is not dependent on the existence of heating or a method of implementing heating, although the invention is particularly well suited for use in heating where the aim is incineration of sludge SL or for some other use requiring thermal energy.

As regards dimensions, the figures show a processing drum DR with a length of about 8 to 15 metres, for example, the diameter of the processing drum DR being about 0.5 to 3 metres, for example. The capacity of the apparatus for processing sludge SL is several tens of thousands of kilogrammes per hour, e.g. 20 to 40 thousand kilogrammes per hour, when sludge volume prior to processing is concerned. The capacity may even be higher.

As regards the capacity required of the processing drum DR, its support structures and a rotation motor RM of the processing drum, it is to be noted that the heat-accumulating material HCM, such as crushed stone or other stone material, small ceramic pieces, or small pieces of metal, to be mixed with the sludge substantially increase the weight, because the weight of the heat-accumulating material HCM may be of the same order as the weight of the sludge, or even significantly higher, if the heat-accumulating material HCM, i.e. material that stores heat, consists of steel balls, for example. According to an embodiment, the rotation speed of the drum DR is 3 to 15 rpm (rotations per minute).

The apparatus 100 under discussion is thus for processing sludge. The apparatus comprises a processing drum DR provided with an inlet IN and an outlet OUT for sludge to be processed and for heat-accumulating material HCM in the form of particles that maintain heat storage of the sludge. The sludge and the heat-accumulating material HCM is brought into a sludge handling space SHS inside the processing drum DR. The processing drum is rotated by a motor M on the outer circumference of the processing drum DR, for example. The processing drum comprises a transfer member, which by means of the rotation of the drum DR moves the sludge and the heat-accumulating material HCH forward and also mixes them. The transfer member TR1 is a screw flange TR provided on the surface of a wall W2 of the sludge space SHS in the processing drum DR and slightly tilted in the main direction of flow FM. As the processing drum DR rotates in a direction of rotation R1, the transfer member TR1, such as the screw flange TR1, moves the material (the sludge and the heat-accumulating material HCM) in a screw-like manner in the sludge handling space from the direction of the inlet IN to the direction of the outlet OUT, i.e. in a longitudinal direction of the drum. Mixing is also performed by lifters LF, which due to the rotation of the drum capture sludge and heat-accumulating material HCM at the extreme lowest point of the drum, and as the extreme top point is reached, the sludge and the heat-accumulating material HCM drop to the bottom of the drum DR, i.e. in practice to the bottom of the sludge handling space SHS.

It is noticed that, at a posterior part of the processing drum DR, the apparatus comprises a screen SCR or some other separator SCR in connection with the processing drum for separating the heat-accumulating material HCM from the processed sludge. The heat-accumulating material HCM may thus be separated in order to be recirculated back to an anterior part of the drum DR, i.e. to the inlet side.

A return line RL for recirculating heat-accumulating material HCM to be removed from the sludge handling space SHS inside the processing drum back to the sludge handling space SHS inside the processing drum DR for reuse is a return channel RL provided in connection with said processing drum DR. It is noticed that in an embodiment the return channel RL for the heat-accumulating material HCM is in the casing structure of a wall W of the processing drum DR, the casing structure being formed by an outer wall W1 and an inner wall W2 of the processing drum DR, of which the inner wall W2 is at the same time the one defining the outer wall of the sludge handling space SHS.

Between the wall W2 of the sludge handling space SHS of the processing drum DR and the separator SCR there is a channel, opening or other transfer connection TC1, in the example of Figure 3 it is an opening TC1, through which the processed sludge and the heat-accumulating material HCM may be conveyed to the separator SCR. With a particular reference to Figure 3, in an embodiment the separator SCR is on the outer circumference of the processing drum DR, meaning that the mixture of the sludge and the heat-accumulating material HCM proceeds to the screen through the opening TC1. The screen SCT, or the separator, is provided as an extension of the outer wall W1 of the processing drum DR. The area covered by the screen SCR may be seen as an early stage, or a first part, of the return line RL, although it receives not only the heat-accumulating material HCM but also the processed sludge, the amount of which, however, reduces as it advances in the direction of the arrow FR, i.e. in the return direction, because it passes through the screen SCR and is thus removed from the heat-accumulating material. The mesh of the separator SCR, such as a screen, has been dimensioned on the basis of the heat-accumulating material HCM so that matter exceeding 5 mm in size does not pass through, the screen thus collecting the heat-accumulating material for the return channel and lets through the sludge, ashes remaining therefrom and fine particles, if any, that may have separated from the heat-accumulating material. Figure 2 shows a structure S100, which is a transfer member, such as a helix, transferring the mixture of sludge and heat-accumulating material into the discharge openings TC1.

As is seen in the drawings, Figures 1 and 5 show the processing drum DR without the separator SCR that would otherwise be provided at the left-hand side end, i.e. the posterior end, of the processing drum DR. The separator SCR is a cylindrical screen consisting of one or more sections. Figure 1 shows structures underneath the screen, i.e. the anterior part of the returning transfer member TR 2, such as a screw flange structure, and the wall W1 of the sludge handling space SHS.

In order to get the heat-accumulating material HCM separated with the screen SCR, i.e. the separator SCR, easily into the return channel RL, an embodiment provides a channel, opening or some other transfer connection TC2 between the separator SCR and the return channel RL. Correspondingly, between the posterior part of the return channel RL, i.e. the part which is at the anterior part of the drum DR, and the inlet side, i.e. the input side, of the processing drum, there is provided a channel, opening or some other transfer connection TC3, which in the example of Figure 3 is an opening, and a plural number of those may be provided on the circumference of the inner wall W2.

As is seen in the figures, in one embodiment the return channel RL for the heat-accumulation material RL surrounds the sludge handling space SHS on the outside thereof, because then it will not form a flow obstacle in the sludge handling space SHS and because the return line RL may then be easily constructed by means of an additional wall W1. A further point on the same topic; one embodiment provides an apparatus in which the return channel RL is defined by a transfer member TR2, such as the screw flange structure TR2, which is arranged to employ the rotation of the processing drum DR to transfer heat-accumulation material through the return line. The return channel is also defined by the outer wall W1 of the return line and the sludge space wall W2 serving as the inner wall of the return line.

To facilitate the movement of the heat-accumulating material HCM in the return channel RL, in one embodiment the processing drum DR is tilted against the main direction of flow FM determined by the processing drum, which means that the return line RL is in an oppositely tilted, i.e. downward, position, and thus the anterior part of the return line RL at the posterior end of the drum DR is higher up than the posterior part of the return line RL at the anterior end of the drum DR.

Next, a method is discussed, the method in question concerning the processing of sludge in a processing drum. One or more of the following will be performed in the processing: drying of sludge, i.e. decreasing the percentage of moisture, destroying pathogenic material from sludge, thermal treatment of sludge so that it becomes suitable as fertilizer or soil amendment, incineration of sludge.

Through the inlet IN, sludge and heat-accumulating material HCM is supplied into the drum DR, unless the drum DR already contains those. In the method, sludge is processed in the sludge handling space of the processing drum DR together with heat-accumulating material that is in the form of particles. If sludge incineration is to be carried out, or if the process for some other reason requires thermal energy from an external heat source, a heater H, such as a burner running on light fuel oil, is used.

The drum is rotated at a slow rotation speed by means of a motor M and, as the drum DR rotates, a transfer member TR1, such as a screw flange TR1, provided on the inner surface of the wall W2 of the sludge handling space SHS of the drum DR transfers the contents, i.e. the sludge and the heat-accumulating material HCM, in the sludge handling space SHS from the direction of the inlet IN towards the outlet OUT. The transfer member TR1 and the rotating motion also stir the mixture of the sludge and the heat-accumulating material HCM. If sludge incineration is concerned, the outlet OUT may refer to an anterior part of a flue gas duct into which fine ashes remaining from the sludge proceed in the flue gas. If the handling in question is one in which the processed sludge is to be used as fertilizer or soil amendment, for example, the outlet OUT may refer to an opening at the posterior end of the drum DR, which in the version of the figures is a screen outlet on a side of the posterior part of the drum. The inlet IN may be an end opening at the anterior end of the drum.

With the screen or some other separator, the heat-accumulating material HCM is separated from the processed sludge, although in the case of incineration in particular it may be nothing but flue gas containing ashes. Hence, what is essential is that the separator SCR collects the heat-accumulating material HCM so that it may be recirculated for use and thus the thermal energy stored therein may be utilized for new sludge material.

In other words, the heat-accumulating material HCM is recirculated back into the sludge handling space SHS of the processing drum DR by recirculating the heat-accumulating material HCM through the return channel RL provided in said drum DR.

As the processing drum DR rotates, the transfer member TR2, such as the screw flange structure TR2, comprised by the return channel RL moves heat-accumulating material HCM through the return line RL, i.e. to direction FR, which is opposite to the direction of movement of the sludge and the heat-accumulating material HCM in the sludge handling space SHS, which takes place in the main direction of flow FM.

According to an embodiment, heat-accumulating material HCM is recirculated from the direction of the outlet OUT of the processing drum back towards the inlet side of the processing drum by the rotating motion of the processing drum DR that transfers the mixture of the sludge and the heat-accumulating material HCM in the main direction of flow FM from the direction of the inlet IN of the processing drum DR towards the outlet OUT of the processing drum DR, i.e. in a longitudinal direction of the drum. The heat-accumulating material HCM is preferably recirculated from the direction on the outlet OUT side of the processing drum DR back towards the inlet of the processing drum DR by the rotating motion of the processing drum DR, which at the same time transfers the mixture of the sludge and the heat-accumulating material HCM in the main direction of flow from the direction of the inlet IN of the processing drum towards the outlet OUT of the processing drum.

In other words, the transfer member TR1 works in the main direction of flow FM and acts on the mixture of the sludge and the heat-accumulating material HCM. The transfer member TR2, in turn, works in the return direction FR and acts on the heat-accumulating material, although at the screen SCR there is still some sludge also until it drops through the screen before the opening TR2. Underneath the drum and the screen SCR, a silo, or the like, may be provided for collecting the material that has passed through the screen.

In conclusion, there is provided a nested structure of antiparallel motion with sludge and heat-accumulating material HCM moving in the centre in a main direction of flow FM, while, according to a preferred embodiment, outward thereof, i.e. in the return channel RL surrounding the sludge handling space SHS, heat-accumulating material HCM to be returned moves in the opposite direction, i.e. in the return direction FR, activated by the same rotating motion of the drum, and a simultaneous movement of sludge and heat-accumulating material activated by the transfer member TR1 takes place in the sludge handling space in the main direction of flow FM.

It is apparent to a person skilled in the art that as technology advances, the basic idea of the invention may be implemented in many different ways. The invention and its embodiments are thus not restricted to the above-described examples but may vary within the scope of the claims.

## Claims

1. An apparatus for processing sludge, the apparatus comprising a processing drum (DR) provided with an inlet (IN) and an outlet (OUT) for sludge to be processed and for heat-accumulating material (HCM) in the form of particles maintaining the heat storing capacity of the sludge (SL), **characterized in that** a return line (RL) for recirculating heat-accumulating material (HCM) to be removed from the sludge handling space (SHS) inside the processing drum (DR) back into the sludge handling space inside the processing drum (DR) for reuse is a return channel (RL) provided in connection with said processing drum (DR).

2. An apparatus as claimed in claim 1, **characterized in that** the return channel (RL) for the heat-accumulating material (HCM) is in the enclosing structure of a wall (W) of the processing drum.

3. An apparatus as claimed in claim 1 or 2, **characterized in that** the apparatus comprises a screen or some other separator (SCR) in connection with the processing drum (DR) for separating the heat-accumulating material (HCM) from the processed sludge.

4. An apparatus as claimed in claim 3, **characterized in that** the separator (SCR) is on the outer circumference of the processing drum (DR).

5. An apparatus as claimed in claim 3 or 4, **characterized in that** between the wall (W2) of the sludge handling space (SHS) of the processing drum (DR) there is provided a channel, opening or some other transfer connection (TC1).

6. An apparatus as claimed in any one of the preceding claims 3 to 5, **characterized in that** between the separator (SCR) and the return channel (RL) there is a channel, opening or some other transfer connection (TC2).

7. An apparatus as claimed in any one of the preceding claims 3 to 6, **characterized in that** between a posterior part of the return channel (RL) and an anterior part of the processing drum there is an opening, channel or some other transfer connection (TC3).

8. An apparatus as claimed in any one of the preceding claims, **characterized in that** the return channel (RL) surrounds the sludge handling space (SHS) on the outside thereof.

9. An apparatus as claimed in claim 8, **characterized in that** the return channel (RL) is defined by a screw flange structure (TR2) which is arranged to move heat-accumulated material (HCM) through the return line (RL) by means of the rotation of the processing drum (DR).

10. An apparatus as claimed in claim 9, **characterized in that** the return channel (RL) is also defined by an outer wall (W1) of the return line and a wall of the sludge handling space (SHS) that serves as an inner wall (W2) of the return line.

11. An apparatus as claimed in any one of the preceding claims, **characterized in that** the processing drum (DR) is tilted so that the return cdhannel (RL) is in a declining tilting position, thus facilitating the transfer of the heat-accumulating material in the return line (RL).

12. A method for processing sludge in a processing drum, in which method sludge is processed together with heat-accumulating material in the form of particles in a sludge handling space of the processing drum, the heat-accumulating material being then separated from the processed sludge and recirculated back into the sludge handling space of the processing drum, **characterized in that** the heat-accumulating material is recirculated back through a return channel included in said drum.

13. A method as claimed in claim 12, **characterized in that** heat-accumulating material is recirculated from the direction of processing drum outlet back towards the processing drum inlet by the rotating motion of the processing drum that moves the mixture of sludge and heat-accumulating material (HCM) in the main direction of flow from the direction of the inlet (IN) of the processing drum (DR) towards the outlet of the processing drum (DR).

14. A method as claimed in claim 12 or 13, **characterized in that** heat-accumulating material is recirculated from the direction of the outlet (OUT) of the processing drum (DR) back towards the inlet of the processing drum by the rotating motion of the processing drum that at the same time moves the mixture of sludge and heat-accumulating material (HCM) in the main direction of flow from the direction of the inlet (IN) of the processing drum towards the outlet (OUT) of the processing drum.
